# EUROPÄISCHE PATENTSCHRIFT

(11) **EP 3 904 833 B1**
(45) Veröffentlichungstag und Bekanntmachung des Hinweises auf die Patenterteilung: **12.06.2024**
(21) Anmeldenummer: 21166295.2
(22) Anmeldetag: 31.03.2021
(51) Int. Cl.: G01C 21/28, B60W 50/029, B60W 60/00, B60W 50/023, B60W 50/00

(54) **VORRICHTUNG UND VERFAHREN ZUR AUSWERTUNG VON SIGNALEN VON UMFELDERFASSUNGSSENSOREN FÜR EINE TRAJEKTORIENREGELUNG UND/ODER -STEUERUNG EINES AUTOMATISIERT BETREIBBAREN FAHRZEUGES**
DEVICE AND METHOD FOR EVALUATING SIGNALS FROM SENSORS FOR TRAJECTORY CONTROL AND / OR CONTROL OF AN AUTOMATED VEHICLE
DISPOSITIF ET PROCÉDÉ D'ÉVALUATION DES SIGNAUX DE CAPTEURS ENVIRONNEMENTAUX POUR UNE RÉGULATION ET/OU COMMANDE DE TRAJECTOIRE D'UN VÉHICULE AUTOMATISÉ

(30) Priorität: 29.04.2020 DE 102020205419
(43) Veröffentlichungstag der Anmeldung: 03.11.2021
(73) Patentinhaber: ZF Friedrichshafen AG, 88046 Friedrichshafen (DE)
(72) Erfinder: Randler, Martin, 88090 Immenstaad (DE); Hinsberger, Arno, 88281 Schlier (DE); Rinkenauer, Stefan, 88677 Markdorf (DE); Mayr, Daniel, 88048 Friedrichshafen (DE)

(56) Entgegenhaltungen:
- WO-A1-2019/017253
- WO-A1-2019/211282
- DE-A1-102016 009 655
- US-A1- 2020 088 525
- US-A1- 2020 089 246

## Beschreibung

Die Erfindung bezieht sich auf eine Vorrichtung und ein Verfahren zur Auswertung von Signalen von Umfelderfassungssensoren für eine Trajektorienregelung und/oder -steuerung eines automatisiert betreibbaren Fahrzeuges. Die Erfindung bezieht sich insbesondere auf die Freigabe bezüglich systematisch und statistisch auftretender SOTIF Risiken. SOTIF bedeutet safety of the intended functionality.

Für den Übergang eines technischen Systems von der Entwicklungsphase in die Serienproduktion ist die Freigabe dieses Systems notwendig. Die Freigabe erfolgt erst dann, wenn die zuvor definierten Anforderungen, insbesondere die Anforderungen an die Sicherheit des technischen Systems, von diesem technischen System erfüllt werden. Freigabekonzepte, die aktuell in der Automobilindustrie eingesetzt werden, erzielen Freigaben für verschiedene Automatisierungsstufen, bei denen stets die Kontrollierbarkeit durch einen menschlichen Fahrer, sei es durch direkte Kontrolle des Fahrers oder durch Rückfallebene auf den Fahrer, gegeben ist.

Eine Besonderheit des autonomen Fahrens ist der Wegfall der Rückfallebene auf den menschlichen Fahrer ab einer bestimmten Automatisierungsstufe, beispielsweise SAE Level 3. Die Sicherheit ergibt sich dann ausschließlich aus dem technischen System Fahrroboter und Fahrzeug. In "Autonomes Fahren - Technische, rechtliche und gesellschaftliche Aspekte", Springer Vieweg, 2015, offenbaren Wachenfeld und Winner in ihrem Beitrag "Die Freigabe des autonomen Fahrens", dass ausgehend von 3375 polizeilich erfassten Unfällen mit Getöteten in Deutschland im Jahr 2012 und einer Fahrleistung von 709 Milliarden Kilometer in Deutschland diese Zahl als Durchschnittswert bedeutet, dass zwischen zwei Unfällen mit Getöteten 210 Millionen Kilometer liegen. Bezogen auf diese Zahlen liefert das Minimal Endogenous Mortality, abgekürzt MEM, Modell zur Risikoanalyse für sicherheitsrelevante Systeme für ADAS Systeme, das heißt für advanced driver assistance systems, als Schwellenwert für die Mortalität 10⁻²/Stunde. Das heißt, es gibt alle 100 Betriebsstunden einen Fehler, zum Beispiel Anbremsen des Notbremsassistenten ohne konkretes Hindernis. Fehler umfasst Ausfälle von elektrischen/elektronischen System, geregelt in ISO 26262, und funktionale Fehler, geregelt in ISO 21448. Im ADAS Fall wird das Fehlverhalten des Systems von einem menschlichen Fahrer abgefangen und der Übergang in einen kritischen Fehler verhindert. Im AD System, das heißt autonomous driving, ist die Rückfallebene des menschlichen Fahrers nicht vorhanden. Im AD System beträgt der Schwellenwert 10⁻⁹/Stunde.

Eine derartig extrem hohe Anzahl an Absicherungskilometer stellt eine Herausforderung an die Freigabe. Zusätzlich fehlen gesetzliche Anforderungen an die Freigabe autonomer Fahrzeuge. Dadurch werden autonome Fahrzeuge in absehbarer Zeit mittels Stands der Technik nicht freigegeben werden können. Für die Freigabe und die Berechnung des zu erwartenden Restrisikos eines Systems fehlen im Stand der Technik anwendbare Verfahren, obwohl in dem SOTIF-Standard ISO/PAS 21448:2019 "Road vehicles -- Safety of the intended functionality" solche Verfahren gefordert werden.

Die Norm SAE J3016 beschreibt die Klassifizierung und Definition von Begriffen für straßengebundene Kraftfahrzeuge mit Fahrzeugsystemen zum autonomen Fahren. Die Norm definiert einen Betriebsrahmen, auch operational design domain genannt, als die Betriebsbedingungen, für die ein ADAS/AD System oder Merkmale davon speziell konzipiert wurde und unter denen es funktionieren soll.

Die DE 10 2016 009 655 A1 offenbart ein Verfahren zum Betrieb eines Fahrzeugs, wobei das Fahrzeug in einem teilautonomen oder autonomen Fahrbetrieb anhand von Entscheidungen einer künstlichen neuronalen Netzwerkstruktur gesteuert wird. Erfindungsgemäß werden die Entscheidungen von einem statischen ersten neuronalen Netzwerk und einem lernfähigen zweiten neuronalen Netzwerk vorgeschlagen, wobei dann, wenn eine vom ersten neuronalen Netzwerk und eine vom zweiten neuronalen Netzwerk vorgeschlagene Entscheidung übereinstimmen, diese gemeinsame Entscheidung zur Steuerung des Fahrzeugs verwendet wird. Dann, wenn eine vom ersten neuronalen Netzwerk und eine vom zweiten neuronalen Netzwerk vorgeschlagene Entscheidung voneinander abweichen und eine Ausführung der Entscheidung vorgegebene Sicherheits- und/oder Ethikkriterien in höherem Grade als die vom ersten neuronalen Netzwerk vorgeschlagene Entscheidung erfüllt, wird die vom zweiten neuronalen Netzwerk vorgeschlagene Entscheidung zur Steuerung des Fahrzeugs verwendet. In allen anderen Fällen wird die vom ersten neuronalen Netzwerk vorgeschlagene Entscheidung zur Steuerung des Fahrzeugs verwendet.

Eine Aufgabe der vorliegenden Erfindung war es, die Freigabe eines ADAS/AD Systems zu verbessern.

Die erfindungsgemäße Vorrichtung und das erfindungsgemäße Verfahren lösen diese Aufgabe mittels einem ersten Pfad, dem sogenannten Performancepfad, und einem zweiten Pfad, dem sogenannten Sicherheitspfad. Die Umfelderfassungssensoren, die auch Inertialsensoren eines Fahrzeuges umfassen können, sind an beide Pfade angeschlossen. Nach einem Aspekt können auch unterschiedliche Sensoren für die Pfade verwendet werden.

Die Aufgabe des Performancepfades ist eine möglichst weit vorausschauende Regelung im Komfortbereich, zum Beispiel Bestimmung von Beschleunigungen, umfassend auch Verzögerungen, von 1.5m/s², auf Basis aller auch nur teil und zeitweise über die Sensorik erfassbarer Information und hochperformanter und/oder wissensbasierter Algorithmen, zum Beispiel Erkennung einer Fußgängerabsicht zur Querung der Straße. Um die hohe funktionale Performance zu erreichen, werden die Sensoren weit außerhalb ihres sicheren Erfassungsbereiches betrieben. Das führt zu statistischer und Szenen systematischer Fluktuation von Messpunkten und damit zu Fehlern in der Umgebungserfassung. Ebenfalls machen gelernte Algorithmen unter diesen Bedingungen Interpretationsfehler. Das Verhalten der Auswertealgorithmik ist nicht zwingend eindeutig vorhersagbar. Das bedeutet, dass eine sichere Regelung nicht gewährleistet werden kann und der Performancepfad entsprechen falsche Trajektorienvorgaben machen kann.

Die Aufgabe des Sicherheitspfades besteht darin, die Sensorik für jede erforderliche Messaufgabe immer nur im sicheren Erfassungsbereich auszuwerten. Die Auswertung erfolgt mit analytischen / nachvollziehbaren Algorithmen. Das Verhalten der Sensorik in Bezug auf die Messaufgabe lässt sich mit spezifizierbaren Testfällen für den gesamten Nutzbereich abtesten. Der sichere Erfassungsbereich ist also durch eine deterministische Umgebungserfassung gekennzeichnet. Die Ergebnisse sind weiter weniger performant als im Performancepfad, zum Beispiel geringere Reichweite, keine Erkennung von Absichten etc., dafür aber immer auf sicher vorhersagbar und prüfbar. Deshalb übernimmt dieser Pfad nur die Überprüfung der Trajektorie oder der Perzeption aus dem Performancepfad und korrigiert diese gegebenenfalls durch ein unkomfortables, zum Beispiel 8m/s² maximaldynamisches, Manöver, um zu verhindern, dass aus dem Fehler im Performancepfad ein kritischer Fehler wird. Die Sicherheit des Performancepfads muss 10⁻⁹/Stunde erreichen.

Gemäß einem Aspekt stellt die Erfindung eine Vorrichtung zur Auswertung von Signalen von Umfelderfassungssensoren für eine Trajektorienregelung und/oder -steuerung eines automatisiert betreibbaren Fahrzeuges nach Anspruch 1 bereit. Die Vorrichtung umfasst wenigstens einen ersten Pfad und einen zweiten Pfad. Der erste Pfad entspricht dem Performancepfad. Der zweite Pfad entspricht dem Sicherheitspfad. Ein Pfad umfasst eine Signalleitung und eine Signalauswertung. Die Signalleitung umfasst eine Leitung von Sensorrohsignalen oder vorverarbeiteten Signalen der Sensoren zu der Signalauswertung und eine Leitung von auf Basis der ausgewerteten Sensorsignale erhaltenen Regel- und/oder Steuerungssignalen zu Fahrzeugaktuatoren. Zwischen Sensor und Signalauswertung und zwischen Signalauswertung und Fahrzeugaktuatoren kann die Signalauswertung, das heißt die erste und die zweite Auswerteeinheit, entsprechende Schnittstellen umfassen. Die Pfade umfassen Pfade in Hardware und in Software. Der erste Pfad umfasst eine erste Auswerteeinheit. Die erste Auswerteeinheit ist ausgeführt, die Signale in einem ersten Erfassungsbereich der Umfelderfassungssensoren auszuwerten und erste Regelungs- und/oder Steuerungssignale zu bestimmen. Der zweite Pfad umfasst eine zweite Auswerteeinheit, die ausgeführt ist, die Signale in Abhängigkeit einer Messaufgabe in einem zweiten Erfassungsbereich der Umfelderfassungssensoren auszuwerten. Der erste Erfassungsbereich umfasst den zweiten Erfassungsbereich. Die zweite Auswerteeinheit bestimmt zweite Regelungs- und/oder Steuerungssignale. Die Vorrichtung ist ausgeführt, Aktuatoren des Fahrzeuges die zweiten Regelungs- und/oder Steuerungssignale bereitzustellen, falls eine Auswertung der ersten Auswerteeinheit verschieden ist von der Auswertung der zweiten Auswerteeinheit.

Die Erfindung bezieht sich auch auf eine Bestimmung des ersten und/oder zweiten Erfassungsbereichs mittels eines Funktionssichtfeldesauch function field of view genannnt. Das Funktionssichtfeld stellt beispielsweise den zweiten Erfassungsbereich, auch sicherer Erfassungsbereich genannt, dar, in dem eine Fehlerrate von 10⁻⁹/Stunde erreicht wird, bezogen auf Fehler nach ISO 26262, das heißt funktionale Sicherheit von E/E Komponenten, und auf funktionale Fehler, das heißt SOTIF. Bezüglich Fehler nach ISO 26262 entspricht eine Fehlerrate von 10⁻⁹/Stunde dem ASIL D Level. Das Funktionssichtfeld stellt auch den ersten Erfassungsbereich, auch maximaler Erfassungsbereich genannt, dar. Das Funktionssichtfeld wird durch Auswertung verschiedenster Szenarien in einem Betriebsrahmen bestimmt. Beispielsweise werden als Parameter ausgewertet die Geschwindigkeit des Egofahrzeuges, die Geschwindigkeit des Verkehrs, Verkehrsteilnehmer und verschiedene Verkehrssituationen. Die Parameter werden beispielsweise in Simulationen bestimmt und statistisch variiert. Nach einem weiteren Aspekt der Erfindung wird das Funktionssichtfeld gegen das Perzeptionssichtfeld getestet. Das Perzeptionssichtfeld stellt die physikalischen Erfassungsbereiche der Umfelderfassungssensoren dar. Für bestimmte Verkehrssituationen können die eingesetzten Umfelderfassungssensoren durch weitere Umfelderfassungssensoren erweitert werden.

Gemäß einem weiteren Aspekt stellt die Erfindung ein Verfahren zur Auswertung von Signalen von Umfelderfassungssensoren für eine Trajektorienregelung und/oder - steuerung eines automatisiert betreibbaren Fahrzeuges nach Anspruch 4 bereit.

Der Betriebsrahmen ist die operational design domain wie in SAE J3016 definiert. Beispielsweise ist der Betriebsrahmen eine 0km bis 2km, 5km oder 10km bis 100km lange Buslinie eines People Movers, Stadtbusses, Regionalbusses oder sonstigen Fahrzeuges.

Die Fahraufgabe, die zu diesem Betriebsrahmen gehört, umfasst beispielsweise
- in der Spur fahren;
- vor Hindernissen halten;
- in einer Karte lokalisieren.

Objekte, die zur Bewältigung der Fahraufgabe erkannt werden müssen, umfassen beispielsweise:
- in der Spur fahren: Spurmarkierungen;
- vor Hindernissen halten: Fahrzeuge, Fahrräder, Fußgänger, Kleinkinder, insbesondere krabbelnde Kleinkinder;
- in einer Karte lokalisieren: Lokalisierungsmerkmale, beispielsweise Landmarken.

Die jeweiligen Messaufgaben lauten beispielsweise:
- in der Spur fahren: Erkennung Markierung, Vermessung Markierung;
- vor Hindernissen halten: Detektion, Klassifikation, Lokalisation der Objekte, semantische Zuordnung;
- in einer Karte lokalisieren: geometrische Vermessung der Lokalisierungsmerkmale, Updaten einer High-Definition Map.

Die Messparameter lauten beispielsweise:
- in der Spur fahren: mindestens acht Bildpixel einer Zeile eines Kamerasensors liegen auf der Markierung;
- vor Hindernissen halten: krabbelndes Kleinkind: mindestens 8x8 Messpunkte bei 0.2° Auflösung entsprechen 8 Messpunkte in Azimut in 7.5m Entfernung bei einer angenommenen Objekthöhe von 20cm. Wenn das Fahrzeug auf einer Strecke von 7.5m zum Stillstand kommen soll und der zweite Pfad eine maximaldynamische Verzögerung von 8m/s² erzielen kann, darf das Fahrzeug nicht schneller als 10.95m/s fahren, was einer Geschwindigkeit von ca. 40km/h entspricht;
- in einer Karte lokalisieren: vergleichbar zu Spurerkennung.

Unter den angegebenen Messparametern ist also eine Geschwindigkeit von bis zu 40km/h möglich, um in einem Fehlerfall im ersten Pfad, beispielsweise keine Erkennung eines krabbelnden Kleinkindes, obwohl dieses real vorhanden ist, den ersten Pfad mittels des zweiten Pfades zu korrigieren und Aktuatoren des Fahrzeuges mit zweiten Regelungs- und/oder Steuerungssignale des zweiten Pfades anzusteuern. Der zweite Pfad realisiert damit einen Nothaken, beispielsweise eine Notbremsung. Ein menschlicher Sicherheitsfahrer ist damit nicht mehr erforderlich. Der zweite Pfad greift nur im letzten Moment ein, das heißt die Aktuatoren des Fahrzeuges werden nur im letzten Moment mit den zweiten Regelungs- und/oder Steuerungssignalen der zweiten Auswerteeinheit angesteuert. Der Nachweis der sicheren Erkennung in dem zweiten Pfad ist dann durch definierte Grenztestfälle möglich.

Nach einem weiteren Aspekt wird nachgewiesen, dass eine schwächst möglich reflektierende Kleinkindkleidung zu einem Signal-Rausch-Verhältnis führen würde, das sicher über einer Rauschschwelle liegt, beispielsweise mittels Falschalarmrate.

Vorteilhafte Ausgestaltungen der Erfindung ergeben sich aus den Unteransprüchen, der Zeichnung und der Beschreibung bevorzugter Ausführungsbeispiele.

Die Vorrichtung ist beispielsweise als Steuergerät für automatisierte Fahrfunktionen realisiert. Das Steuergerät für automatisiertes Fahren umfasst wenigstens eine ADAS oder AD Domain ECU zur Steuerung eines automatisierten Fahrbetriebs, beispielsweise eines fahrerlosen, vollautomatisierten oder autonomen Fahrbetriebs. ECU bedeutet Electronic Control Unit, das heißt elektronisches Steuergerät. Domain bedeutet Domäne. Domänen im Fahrzeug sind beispielsweise Antriebsstrang, Fahrwerk, Karosserie oder Multi-Media. Viele Funktionen wirken innerhalb einer Domäne, aber auch Domänengrenzen hinweg miteinander in einem Funktionsnetz zusammen.

Die ADAS oder AD Domain umfasst Umfelderfassungssensoren, deren Signale die AD Domain ECU verarbeitet und beispielsweise in Form von Steuersignalen den Antriebs-, Lenkungs- und Bremssystemen bereitstellt für eine autonome Regelung und Steuerung der Längs- und/oder Querführung. Anders ausgedrückt, die ADAS oder die AD Domain ECU nimmt mittels Umfelderfassungssensoren ein Fahrzeugumfeld wahr, leitet daraus eine Trajektorienplanung ab und bestimmt entsprechende Regelungs- und/oder Steuersignale, die Fahrzeugaktuatoren bereitgestellt werden, um die Längs- und/oder Querführung des Fahrzeuges zu regeln und zu steuern. Die Umfelderfassungssensoren sind signalübertragend mit der ECU verbunden.

Das Steuergerät umfasst beispielsweise einen Mehrkernprozessor und Speichermodule. Der Mehrkernprozessor ist für einen Signal-/Datenaustausch mit Speichermodulen konfiguriert. Beispielsweise umfasst der Mehrkernprozessor ein Bussystem. Die Speichermodule bilden den Arbeitsspeicher. Die Speichermodule sind beispielsweise RAM, DRAM SDRAM oder SRAM. Bei einem Mehrkernprozessor sind mehrere Kerne auf einem einzigen Chip, das heißt einem Halbleiterbauelement, angeordnet sind. Mehrkernprozessoren erreichen eine höhere Rechenleistung und sind kostengünstiger in einem Chip zu implementieren im Vergleich zu Mehrprozessorsystemen, bei denen jeder einzelne Kern in einem Prozessorsockel angeordnet ist und die einzelnen Prozessorsockel auf einer Hauptplatine angeordnet sind. Beispielsweise ist die erste Auswerteeinheit als ein erster Kern und die zweite Auswerteeinheit als ein zweiter Kern realisiert. Die erste Auswerteeinheit ist beispielsweise als Grafikprozessor, im Englischen als Graphic Processing Unit, abgekürzt GPU, bezeichnet, realisiert. Grafikprozessoren besitzen eine spezielle Mikroarchitektur zum parallelen Prozessieren von Abläufen. Nach einem Aspekt der Erfindung umfasst der Grafikprozessor wenigstens eine Prozesseinheit, die speziell zum Ausführen von Tensor-und/oder Matrixmultiplikationen ausgeführt ist. Tensor- und/oder Matrixmultiplikationen sind die zentralen Rechenoperationen für das Deep Learning. Die zweite Auswerteeinheit ist beispielsweise als ein zentraler Verarbeitungsprozessor, im Englischen als Central Processing Unit, abgekürzt CPU, bezeichnet, realisiert.

Ein automatisiert betreibbares Fahrzeug ist ein Fahrzeug, beispielsweise ein LKW, PKW oder Bus, das über eine technische Ausrüstung, beispielsweise Umfelderfassungssensoren wie Radar, Kamera, Lidar oder Mikrofone, elektronische Steuergeräte und/oder Aktuatoren, verfügt, die zur Bewältigung einer Fahraufgabe, beispielsweise Längs- und/oder Querführung, beim Steuern des Fahrzeuges den Fahrzeugführer unterstützten (SAE Level 0 bis 3) oder das Fahrzeug automatisiert ohne menschliche Eingriffe steuern (SAE Level 4 bis 5).

Nach einem Aspekt der Erfindung ist das automatisiert betreibbare Fahrzeug ein selbstfahrender People Mover. Ein People Mover ist ein universell ausbau- und einsetzbarer Kleinbus, der insbesondere für den Personennahverkehr und Gütertransport ausgerüstet werden kann. Der People Mover dient der Beförderung von Personen und/oder Gütern auf kurzen Strecken, zum Beispiel in Städten, auf Werksgeländen, auf Geländen von Forschungseinrichtungen wie zum Beispiel Universitäten oder außeruniversitären Einrichtungen, Flughäfen oder Messen. Nach einem weiteren Aspekt der Erfindung ist das automatisiert betreibbare Fahrzeug ein Robotertaxi, eine Passagierdrohne, ein autonomes Shuttle oder ein automatisches Transitnetzwerk, das heißt automatische Fahrzeuge, die in einem Netzwerk von Führungsbahnen operieren. Automatische Transitnetzwerke sind beispielsweise personal rapid transit Systeme, die 4 bis 6 Fahrgäste aufnehmen, oder group rapid transit Systeme, die zwischen 16 und 24 Fahrgäste aufnehmen. Die Führungsbahnen erhöhen die Fahrsicherheit, gleichzeitig sind die jeweiligen, insbesondere teilautomatisierten, Fahrzeuge flexibel, um in dem Netzwerk zu operieren. Nach einem weiteren Aspekt der Erfindung sind die automatisiert betreibbaren Fahrzeuge hybridelektrisch oder vollelektrisch angetrieben.

Automatisierte Fahrfunktionen sind Fahrfunktionen für Längs- und/oder Querführung, beispielsweise Beschleunigung wie etwa Bremsen oder Lenkung, und Fahrfunktionen zur Kommunikation mit Umfeld, beispielsweise Betätigung einer Lichtanlage wie etwa Scheinwerfer oder Blinker oder Betätigung von Schallerzeugungseinrichtungen, beispielsweise einer Hupe.

Die erste Auswerteeinheit und/oder die zweite Auswerteeinheit umfasst nach einem Aspekt der Erfindung beispielsweise einen Mikrocontroller, Prozessor, ASIC, FGPA oder einen programmierbaren Logikbaustein oder eine Computerplattform.

Der zweite Erfassungsbereich entspricht einem sicheren Erfassungsbereich. Der zweite Erfassungsbereich legt fest, welche Korrekturmöglichkeiten der zweite Pfad maximal auf eine im ersten Pfad falsch berechnete Trajektorie hat, beispielsweise in Bezug auf die maximal beherrschbare Geschwindigkeit. Diese Grenze gilt damit für den Betrieb des autonomen Fahrzeuges.

Nach einem weiteren Aspekt der Erfindung steht die Vorrichtung Signal übertragend mit einem Fahrzeugbussystem in Wirkverbindung. Die Vorrichtung erhält als Fahrzeugdaten Längs-, Quer-, Vertikalbeschleunigung des Fahrzeuges, Fahrzeuggeschwindigkeit, Lenkungssignale, Bremssignale, Fahrzeuglichtsignale und/oder Schallzeichensignale und kontrolliert Regelungs- und/oder Steuerungsbefehle betreffend Längs-, Quer-, Vertikalbeschleunigung des Fahrzeuges, Fahrzeuggeschwindigkeit, Lenkung, Bremse, Fahrzeuglichtsignale und/oder Schallzeichensignale. Beispielsweise umfasst die Vorrichtung Schnittstellen zu einem CAN-Bus, LIN-Bus und/oder für sicherheitskritische Fahrfunktionen zu einem FlexRay-Bus.

Bestimmte Fahraufgaben, die von automatisierten Fahrfunktionen bewältigt werden, erfordern beispielsweise auch eine automatische Steuerung von Fahrzeuglichtsignalen und/oder Schallzeichensignalen, beispielsweise beim Abbiegen Blinker aktivieren oder beim Warnen anderer Verkehrsteilnehmer betätigen einer Hupe. Fahrzeuglichtsignale sind beispielsweise Signale für Fahrzeugscheinwerfer oder Fahrzeugblinker. Schallzeichensignale sind beispielsweise Signale für eine Hupe.

Nach einem weiteren Aspekt der Erfindung regelt und/oder steuert die Vorrichtung ein betriebssicheres Ausfallen, auch fail operational genannt, von sicherheitsrelevanten Fahrfunktionen, beispielsweise Bremse. Die Regelung erfolgt beispielsweise mit einem PDT oder PlOT Regler, der in die Vorrichtung integriert ist. Beispielsweise umfasst das automatisiert betreibbare Fahrzeug ein zweites, zu dem ersten redundantes, Bremssystem. Damit werden false negative/false positive Ereignisse überwacht.

Nach einem weiteren Aspekt der Erfindung umfasst die Vorrichtung eine Kontrolleinheit. Die Kontrolleinheit kontrolliert, ob die Auswertung der ersten Auswerteeinheit verschieden ist von der Auswertung der zweiten Auswerteeinheit, das heißt, ob im ersten Pfad ein Fehler vorliegt. Gegebenenfalls steuert die Kontrolleinheit die Aktuatoren des Fahrzeuges mit den zweiten Regelungs- und/oder Steuerungssignalen an. Andernfalls steuert die Kontrolleinheit die Aktuatoren mit den ersten Regelungs- und/oder Steuerungssignalen an. Die Kontrolleinheit umfasst beispielsweise eine logische Schaltung, mittels der die ersten und zweiten Regelungs- und/oder Steuerungssignale und/oder die Umfelderfassungen des ersten und zweiten Pfades verglichen werden.

Erfindungsgemäß führt die erste Auswerteeinheit einen Maschinenlernalgorithmus und die zweite Auswerteeinheit einen deterministischen Algorithmus aus.

Der Maschinenlernalgorithmus ist beispielsweise ein auf semantische Bilderkennung trainiertes Faltungsnetzwerk. Lautet eine Messaufgabe beispielsweise das Erkennen einer Fahrbahnspur in einem bildgebenden Sensor, beispielsweiser einer Kamera, ist das Faltungsnetzwerk auf Spurerkennung trainiert. Trainierte Fahrbahnmarkierungen umfassen Längsmarkierungen wie etwa Leitlinie oder Fahrbahnbegrenzungslinie, Flächenmarkierungen wie etwa Radwegmarkierungen oder Quermarkierungen wie etwa Stoppschild oder Zebrastreifen. Ein derart trainiertes Faltungsnetzwerk hat den Vorteil, dass eine Fahrbahnspur auch in einer hohen Reichweite des ersten Erfassungsbereichs, beispielsweise in einer Entfernung von 90m von einem Bezugspunkt des Fahrzeuges, erkannt wird. Dies ermöglicht eine komfortable Fahrzeugregelung und/oder -steuerung. Das Faltungsnetzwerk ist ferner trainiert, komplexe Spürverläufe zu prädizieren. Außerdem ist das Faltungsnetzwerk trainiert, einen Kontext einer Fahrbahnmarkierung in der Spurerkennung zu berücksichtigen. Beispielsweise wird eine Bebauung miterkannt und ausgewertet. Das Faltungsnetzwerk ist nicht linear und nicht deterministisch.

Bei dem deterministischen Algorithmus, den die zweite Auswerteeinheit ausführt, treten nur definierte und reproduzierbare Zustände auf ohne Mehrdeutigkeiten. Bei der Messaufgabe der Erkennung einer Fahrbahnspur begrenzt die zweite Auswerteeinheit die Erkennung der Spurmarkierung beispielsweise auf klar definierbare Betriebsparameter, unter denen die Spurerkennung immer funktioniert und damit deterministisch ist. Der deterministische Algorithmus umfasst beispielsweise if-else-Programmstrukturen oder Schleifenbefehle, beispielsweise for-Schleife.

Spurmarkierungen umfassen Längsmarkierungen wie etwa Leitlinie oder Fahrbahnbegrenzungslinie, Flächenmarkierungen wie etwa Radwegmarkierungen oder Quermarkierungen wie etwa Stoppschild oder Zebrastreifen. Beispielsweise ist ein Betriebsparameter, dass mindestens acht Messpunkte/Bildpixel des bildgebenden Umfelderfassungssensors einer Zeile auf der Spurmarkierung liegen. Damit wird die Reichweite des zweiten Erfassungsbereich auf 30m Entfernung zu einem Bezugspunkt des Fahrzeuges begrenzt. Je weiter die Spurmarkierung entfernt ist, desto geringer ist die Anzahl der Bildpixel, die auf der Spurmarkierung liegen. Ein weiterer Betriebsparameter ist, dass der Kontrast der Spurmarkierung zum Asphalt wenigstens 10:1 ist. Damit folgt neben der Reichweiteneinschränkung auch eine Vorgabe an die Infrastruktur zur Auswertung des zweiten Pfades, nämlich dass die Markierung so hell sein muss, dass der Kontrast sichergestellt ist. Sind die Bedingungen für die Spurerkennung erfüllt, kann mittels der Erfindung eine Fehlerrate von 10⁻⁹/Stunde per Test der Grenzbedingungen nachgewiesen werden für jede Messaufgabe auf Basis der Ergebnisse in den Grenztestfällen. Eine statistische Validierung ist nicht erforderlich.

Analog wird die Vermessung von Objekten mit Lidar- oder Radarsensoren geprüft.

Da Lidar- oder Radarsensoren Punktwolken liefern, das sind Listen von allen in einem Umfeld eines Fahrzeuges erfassten Objektpunkten mit zumindest Angabe der jeweiligen Entfernung eines Objektpunktes zu einem Bezugspunkt des Fahrzeuges, sind für eine Spurerkennung statistische Korrelationen von Punkten innerhalb der Punktwolke erforderlich, um Punkte, die auf eine Spur markieren, zueinander zu korrelieren. Damit könnte die Messaufgabe der Spurerkennung in Lidar- oder Radarsensor nicht in dem zweiten Pfad durchgeführt werden. Um auch für Lidar- oder Radarsensoren die Messaufgabe in dem zweiten Pfad deterministisch durchführen zu können, werden die in der am Anmeldetag unveröffentlichten Patentschrift DE 10 2019 215 658.4 offenbarten Lichtstrahlenquellen als Markierungselemente in der Fahrbahnoberfläche verwendet. Diese Markierungselemente sind entlang von Fahrbahnmarkierungen oder in einem vorgegebenen Abstand von den Spurmarkierungen angeordnet. Die Lichtstrahlenquellen sind beispielsweise Infrarot-LEDs. Die Sensoren, die die Lichtfeldstärke messen, sind beispielsweise Photodioden. Damit wird eine Lichtschranke realisiert.

Wenn in dem sicheren Erfassungsbereich die Auswertung mehrerer Sensoren miteinander verrechnet werden soll, muss auch dies in dem zweiten Pfad deterministisch erfolgen, beispielsweise mittels UND-Verknüpfungen. Dadurch werden Mehrdeutigkeiten vermieden.

Die Erfindung ist auch auf Umfelderfassungssensoren anwendbar, die für eine spezifische Messaufgabe keinen sicheren, zweiten Erfassungsbereich haben, zum Beispiel middle range Radar ohne mehrdeutigkeitsfreie Elevationsmessung. Erfindungsgemäß wird ein Hindernis über dessen Reflektivität detektiert, wobei der zweite Erfassungsbereich aus der Reflektivitätsverteilung von Objekten abgeleitet wird.

Nach einem weiteren Aspekt der Erfindung sind der erste Pfad und der zweite Pfad mit unterschiedlicher Hardware ausgeführt. Beispielsweise umfasst der erste Pfad einen Grafikprozessor. Der zweite Pfad umfasst beispielsweise einen ASIC. Durch die Verwendung unterschiedlicher Hardwarekomponenten in dem ersten Pfad und dem zweiten Pfad werden reine Hardwarefehler besser erkannt.

Die Erfindung bezieht sich auch auf ein automatisiert betreibbares Fahrzeug, das mehrere Umfelderfassungssensoren und eine erfindungsgemäße Vorrichtung umfasst. Jeder Umfelderfassungssensor ist Signal übertragend mit einem ersten Pfad und einem zweiten Pfad der Vorrichtung verbunden oder unterschiedliche Umfelderfassungssensoren sind Signal übertragend mit dem ersten Pfad und dem zweiten Pfad verbunden.

Die Freigabe des automatisiert betreibbaren Fahrzeuges erfolgt für den ersten Pfad gegen ein typisches ADAS Ziel per Dauerlauf auf einem der in einem Betriebsrahmen festgelegten Strecke ähnlichem Streckenverlauf. Zum Beispiel muss eine Fehlerraten von 10⁻²/Stunde erreicht werden. Dauerlauf umfasst Simulation und realen Fahrbetrieb. Für den zweiten Pfad erfolgt die Absicherung der Fahraufgabe in Abhängigkeit der Messaufgabe. Erfindungsgemäß wird für die jeweilige Messaufgabe ein sicherer Erfassungsbereich bestimmt und maximale funktionale Betriebsparameter der Fahrfunktion, beispielsweise Geschwindigkeit, abgeleitet. Ferner werden die notwendigen Streckenparameter, zum Bespiel Spurmarkierungsgüte, beispielsweise Kontrastverhältnis Spurmarkierung zu Asphalt, beschrieben, unter denen der sichere Erfassungsbereich anwendbar ist. Die Freigabe des automatisiert betreibbaren Fahrzeuges erfolgt für jede Messaufgabe auf Basis der Grenztestfälle ohne statistische Validierung. Ebenfalls erfolgt die Freigabe der Strecke auf Basis der definierten Streckenparameter. Die Freigabe erfolgt mittels der erfindungsgemäßen Vorrichtung, wobei der erste Pfad von der ersten Auswerteeinheit und der zweite Pfad von der zweiten Auswerteeinheit ausgewertet wird. Die Freigabe wird beispielsweise nach den Schritten des erfindungsgemäßen Verfahrens durchgeführt.

Nach einem weiteren Aspekt des erfindungsgemäßen Verfahrens werden Betriebsparameter festgelegt. Betriebsparameter sind beispielsweise Streckenparameter. Streckenparameter umfassen beispielsweise ein Kontrastverhältnis von Spurmarkierung zu Asphalt, das beispielsweise 10:1 betragen soll. Dieser Parameter ist beispielsweise über die Reflektanz der Spurmarkierung nachweisbar. Ein weiterer Betriebsparameter ist beispielsweise, dass auf der Strecke keine Teerflecken vorhanden sind. Ein weiterer Betriebsparameter ist beispielsweise, dass keine Witterungseinschränkungen vorliegen. Beispielsweise reduziert eine Regendämpfung den sicheren Erfassungsbereich eines Strahlensensors.

Nach einem weiteren Aspekt der Erfindung wird eine Erfassung der Umfelderfassungssensoren in festgelegten Testfällen in Abhängigkeit der Messaufgabe getestet. Dadurch kann das System freigegeben werden ohne statistische Validierung.

Nach einem weiteren, nicht beanspruchten Aspekt ist das Verfahren computerimplementiert. Computerimplementiert bedeutet, dass die Schritte des Verfahrens von einer Datenverarbeitungsvorrichtung, beispielsweise einer Computereinheit, einem Mikrocomputer eines Steuergeräts oder Teilen davon ausgeführt, werden.

Ein weiterer Aspekt umfasst auch ein Computerprogramm zur Auswertung von Signalen von Umfelderfassungssensoren für eine Trajektorienregelung und/oder -steuerung eines automatisiert betreibbaren Fahrzeuges. Das Computerprogramm umfasst Befehle, die eine erfindungsgemäße Vorrichtung veranlassen, das erfindungsgemäße Verfahren auszuführen, wenn das Computerprogramm auf der Steuergerät auf der Vorrichtung läuft. Die Befehle des Computerprogramms umfassen Softwarecodeabschnitte, Maschinencode oder Binärcode.

Gemäß einem weiteren Aspekt wird ein computerlesbarer Datenträger bereitgestellt, auf dem das Computerprogramm gespeichert ist.

Der Datenträger ist beispielsweise ein SSD, volatiler, RAM, nicht volatiler, ROM, oder Flash Datenträger.

Die Erfindung wird in den folgenden Figuren beispielhaft erläutert. Es zeigen:
Fig. 1 ein Ausführungsbeispiel einer erfindungsgemäßen Vorrichtung,
Fig. 2 ein Ausführungsbeispiel eines erfindungsgemäßen ersten und zweiten Erfassungsbereichs und
Fig. 3 eine schematische Darstellung des erfindungsgemäßen Verfahrens.

In den Figuren bezeichnen gleiche Bezugszeichen gleiche oder funktionsähnliche Teile. In den jeweiligen Figuren werden übersichtshalber die für das jeweilige Verständnis relevanten Bezugsteile angegeben.

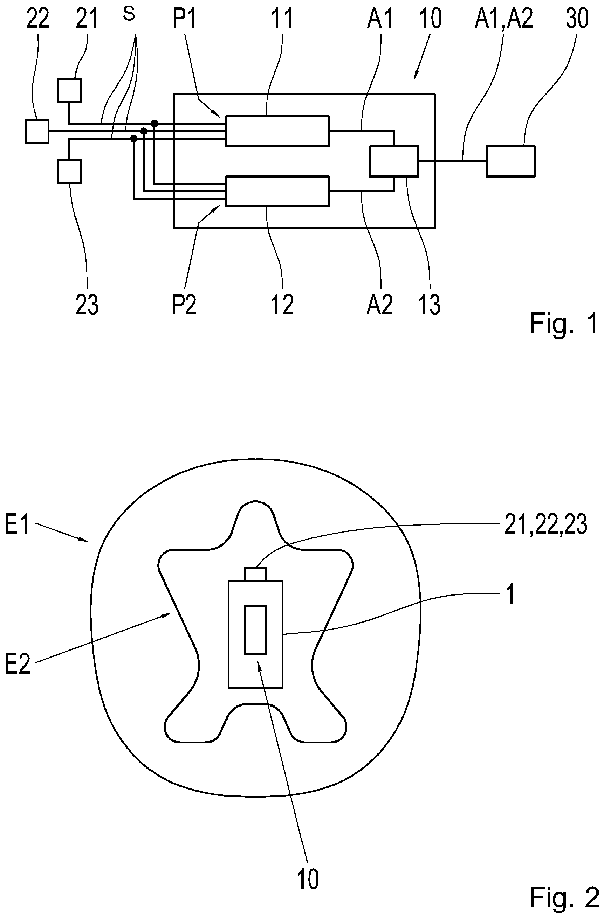

Die Vorrichtung der Fig. 1 wertet Signale S von beispielsweise drei Umfelderfassungssensoren 21, 22, 23 aus. Der Umfelderfassungssensor 21 ist beispielsweise ein optischer Sensor, beispielsweise eine Kamera. Der Umfelderfassungssensor 22 ist beispielsweise ein Radarsensor. Der Umfelderfassungssensor 23 ist beispielsweise ein Akustiksensor. Jeder Umfelderfassungssensor 21, 22, 23 ist Signal übertragend mit einem ersten Pfad P1 und einem zweiten Pfad P2 der Vorrichtung 10 verbunden.

Der erste Pfad P1 umfasst eine erste Auswerteeinheit 11. Die erste Auswerteeinheit 11 führt einen Maschinenlernalgorithmus aus, um die Signale S der Umfelderfassungssensoren 21, 22, 23 auszuwerten. In dem ersten Pfad P1 werden die Signale S in einem ersten Erfassungsbereich E1 ausgewertet, siehe Fig. 2. Der erste Pfad P1 stellt erste Regelungs- und/oder Steuerungssignale A1 einer Kontrolleinheit 13 bereit.

Der zweite Pfad P2 umfasst eine zweite Auswerteeinheit 12. Die zweite Auswerteeinheit 12 führt einen deterministischen Algorithmus aus, um die Signale S der Umfelderfassungssensoren 21, 22, 23 auszuwerten. In dem zweiten Pfad P2 werden die Signale S in einem zweiten Erfassungsbereich E2 ausgewertet, siehe Fig. 2. Der zweite Pfad P2 stellt zweite Regelungs- und/oder Steuerungssignale A2 der Kontrolleinheit 13 bereit.

Die Kontrolleinheit kontrolliert die ersten und zweiten Regelungs- und/oder Steuerungssignale A1, A2. Wenn die ersten Regelungs- und/oder Steuerungssignale A1 verschieden sind von den zweiten Regelungs- und/oder Steuerungssignalen A2, beispielsweise weil eine Erfassung in dem ersten Pfad fehlerbehaftet ist, steuert die Kontrolleinheit 13 Aktuatoren 30 des Fahrzeuges 1 mit den zweiten Regelungs- und/oder Steuerungssignalen A2 an, andernfalls mit den ersten Regelungs- und/oder Steuerungssignalen A1.

Das in Fig. 2 gezeigte Fahrzeug 1 ist ein automatisiert betreibbares Fahrzeug, beispielsweise ein People Mover. Das Fahrzeug umfasst die Umfelderfassungssensoren 21, 22, 23 und die Vorrichtung 10.

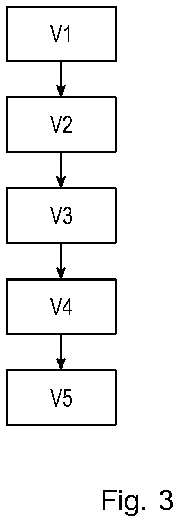

Fig. 3 zeigt das erfindungsgemäße Verfahren. Die Verfahrensschritte V1 bis V5 sind beispielsweise als Softwarecodeabschnitte eines Computerprogramms realisiert.

Der erste Verfahrensschritt V1 umfasst Festlegen eines Betriebsrahmens, innerhalb dessen eine Umfelderfassung und/oder Trajektorienregelung und/oder -steuerung des Fahrzeuges 1 erfolgt. Beispielsweise ist der Betriebsrahmen eine 2 km lange Buslinie eines People Movers innerhalb eines Stadtbezirks. Auf dieser Strecke soll das Fahrzeug in der Spur fahren, vor Hindernissen halten und sich in einer Karte lokalisieren.

Der zweite Verfahrensschritt V2 umfasst Festlegen einer Messaufgabe in Abhängigkeit des Betriebsrahmens. Die Messaufgaben umfassen Erkennung Markierung, Vermessung Markierung, Detektion, Klassifikation und Lokalisation der Objekte, semantische Zuordnung, geometrische Vermessung von Lokalisierungsmerkmalen und Updaten einer High-Definition Map.

Der dritte Verfahrensschritt V3 umfasst Festlegen von Messparametern, um ein aus der Messaufgabe resultierendes Messergebnis zu überprüfen. Die Messparameter umfassen, dass mindestens acht Bildpixel einer Zeile eines Kamerasensors auf der Markierung liegen und mindestens 8x8 Messpunkte bei 0.2° Auflösung 8 Messpunkten in Azimut in 7.5m Entfernung entsprechen bei einer angenommenen Objekthöhe von 20cm.

Der vierte Verfahrensschritt V4 umfasst Durchführen der Messaufgabe mit der Vorrichtung 10, wobei das Messergebnis in einem zweiten Pfad P2 der Vorrichtung 10 überprüft wird.

Der fünfte Verfahrensschritt V5 umfasst Ansteuern der Aktuatoren 30 des Fahrzeuges 1 mit den zweiten Regelungs- und/oder Steuerungssignale A2 der Vorrichtung 10, falls die Kontrolleinheit 13 erkennt, dass eine Auswertung der ersten Auswerteeinheit 11 verschieden ist von der Auswertung der zweiten Auswerteeinheit 12.

## Patentansprüche

1. Vorrichtung (10) zur Auswertung von Signalen (S) von Umfelderfassungssensoren (21, 22, 23) für eine Trajektorienregelung und/oder -steuerung eines automatisiert betreibbaren Fahrzeuges (1), umfassend
• wenigstens einen ersten Pfad (P1) und einen zweiten Pfad (P2), wobei ein Pfad (P1, P2) eine Signalleitung und eine Signalauswertung umfasst, wobei
• der erste Pfad (P1) eine erste Auswerteeinheit (11) umfasst, die ausgeführt ist, die Signale (S) in einem ersten Erfassungsbereich (E1) der Umfelderfassungssensoren (21, 22, 23) auszuwerten und erste Regelungs- und/oder Steuerungssignale (A1) zu bestimmen,
• der zweite Pfad (P2) eine zweite Auswerteeinheit (12) umfasst, die ausgeführt ist, die Signale (S) in Abhängigkeit einer Messaufgabe in einem zweiten Erfassungsbereich (E2) der Umfelderfassungssensoren (21, 22, 23) auszuwerten, wobei der erste Erfassungsbereich (E1) den zweiten Erfassungsbereich (E2) umfasst, und zweite Regelungs- und/oder Steuerungssignale (A2) zu bestimmen,
wobei die Vorrichtung ausgeführt ist, Aktuatoren (30) des Fahrzeuges (1) die zweiten Regelungs- und/oder Steuerungssignale (A2) bereitzustellen, falls eine Auswertung der ersten Auswerteeinheit (11) verschieden ist von der Auswertung der zweiten Auswerteeinheit (12),
**dadurch gekennzeichnet, dass** H
die erste Auswerteeinheit (11) einen Maschinenlernalgorithmus und die zweite Auswerteeinheit (12) einen deterministischen Algorithmus ausführt.

2. Vorrichtung (10) nach Anspruch 1, wobei der erste Pfad (P1) und der zweite Pfad (P2) mit unterschiedlicher Hardware ausgeführt sind.

3. Automatisiert betreibbares Fahrzeug (1) umfassend mehrere Umfelderfassungssensoren (21, 22, 23) und eine Vorrichtung (10) nach einem der Ansprüche 1 bis 2, wobei jeder Umfelderfassungssensor (21, 22, 23) Signal übertragend mit einem ersten Pfad (P1) und einem zweiten Pfad (P2) der Vorrichtung (10) verbunden ist oder unterschiedliche Umfelderfassungssensoren (21, 22, 23) Signal übertragend mit dem ersten Pfad (P1) und dem zweiten Pfad (P2) verbunden sind.

4. Verfahren zur Auswertung von Signalen von Umfelderfassungssensoren (21, 22, 23) für eine Trajektorienregelung und/oder -steuerung eines automatisiert betreibbaren Fahrzeuges (1), umfassend die Schritte
• Festlegen eines Betriebsrahmens, innerhalb dessen eine Umfelderfassung und/oder Trajektorienregelung und/oder -steuerung des Fahrzeuges (1) erfolgt (V1),
• Festlegen einer Messaufgabe in Abhängigkeit des Betriebsrahmens (V2),
• Festlegen von Messparametern, um ein aus der Messaufgabe resultierendes Messergebnis zu überprüfen (V3),
• Durchführen der Messaufgabe mit einer Vorrichtung (10) nach einem der Ansprüche 1 bis 2, wobei das Messergebnis in einem zweiten Pfad (P2) der Vorrichtung (10) überprüft wird (V4), und
• Ansteuern von Aktuatoren (30) des Fahrzeuges (1) mit zweiten Regelungs- und/oder Steuerungssignale (A2) der Vorrichtung (10), falls eine Auswertung der ersten Auswerteeinheit (11) der Vorrichtung (10) verschieden ist von der Auswertung der zweiten Auswerteeinheit (12) (V5),
**dadurch gekennzeichnet, dass**
die erste Auswerteeinheit (11) einen Maschinenlernalgorithmus und die zweite Auswerteeinheit (12) einen deterministischen Algorithmus ausführt.

5. Verfahren nach Anspruch 4, wobei Betriebsparameter festgelegt werden.

6. Verfahren nach Anspruch 4 oder 5, wobei eine Erfassung der Umfelderfassungssensoren (21, 22, 23) in festgelegten Testfällen in Abhängigkeit der Messaufgabe getestet wird.

## Claims

1. Device (10) for evaluating signals (S) from surroundings capture sensors (21, 22, 23) for regulating and/or controlling a trajectory of a vehicle (1) that can be operated in an automated manner, comprising
• at least a first path (P1) and a second pad (P2), wherein one path (P1, P2) comprises a signal line and a signal evaluation, wherein
• the first path (P1) comprises a first evaluation unit (11) which is designed to evaluate the signals (S) in a first capture range (E1) of the surroundings capture sensors (21, 22, 23) and to determine first regulating and/or control signals (A1),
• the second path (P2) comprises a second evaluation unit (12) which is designed to evaluate the signals (S) in a second capture range (E2) of the surroundings capture sensors (21, 22, 23) on the basis of a measurement task, wherein the first capture range (E1) comprises the second capture range (E2), and to determine second regulating and/or control signals (A2),
wherein the device is designed to provide actuators (30) of the vehicle (1) with the second regulating and/or control signals (A2) if an evaluation by the first evaluation unit (11) differs from the evaluation by the second evaluation unit (12),
**characterized in that**
the first evaluation unit (11) executes a machine learning algorithm and the second evaluation unit (12) executes a deterministic algorithm.

2. Device (10) according to Claim 1, wherein the first path (P1) and the second path (P2) are designed with different hardware.

3. Vehicle (1) that can be operated in an automated manner, comprising a plurality of surroundings capture sensors (21, 22, 23) and a device (10) according to one of Claims 1 to 2, wherein each surroundings capture sensor (21, 22, 23) has a signal-transmitting connection to a first path (P1) and a second path (P2) of the device (10) or different surroundings capture sensors (21, 22, 23) have a signal-transmitting connection to the first path (P1) and the second path (P2).

4. Method for evaluating signals from surroundings capture sensors (21, 22, 23) for regulating and/or controlling a trajectory of a vehicle (1) that can be operated in an automated manner, comprising the steps of
• determining an operating framework within which the surroundings are captured and/or a trajectory of the vehicle (1) is regulated and/or controlled (V1),
• determining a measurement task on the basis of the operating framework (V2),
• determining measurement parameters in order to check a measurement result resulting from the measurement task (V3),
• carrying out the measurement task with a device (10) according to one of Claims 1 to 2, wherein the measurement result is checked in a second path (P2) of the device (10) (V4), and
• controlling actuators (30) of the vehicle (1) using second regulating and/or control signals (A2) from the device (10) if an evaluation by the first evaluation unit (11) of the device (10) differs from the evaluation by the second evaluation unit (12) (V5),
**characterized in that**
the first evaluation unit (11) executes a machine learning algorithm and the second evaluation unit (12) executes a deterministic algorithm.

5. Method according to Claim 4, wherein operating parameters are determined.

6. Method according to Claim 4 or 5, wherein a capture by the surroundings capture sensors (21, 22, 23) is tested in defined test cases on the basis of the measurement task.

## Revendications

1. Dispositif (10) permettant d'évaluer des signaux (S) provenant de capteurs de détection d'entourage (21, 22, 23) pour une régulation et/ou une commande de trajectoire d'un véhicule (1) pouvant fonctionner de manière automatisée, comprenant
• au moins un premier chemin (P1) et un deuxième chemin (P2), dans lequel un chemin (P1, P2) comprend un acheminement de signaux et une évaluation de signaux, dans lequel
• le premier chemin (P1) comprend une première unité d'évaluation (11) qui est configurée pour évaluer les signaux (S) dans une première zone de détection (E1) des capteurs de détection d'entourage (21, 22, 23) et pour déterminer des premiers signaux de régulation et/ou de commande (A1),
• le deuxième chemin (P2) comprend une deuxième unité d'évaluation (12) qui est configurée pour évaluer les signaux (S) en fonction d'une tâche de mesure dans une deuxième zone de détection (E2) des capteurs de détection d'entourage (21, 22, 23), dans lequel la première zone de détection (E1) comprend la deuxième zone de détection (E2), et pour déterminer des deuxièmes signaux de régulation et/ou de commande (A2),
dans lequel le dispositif est configuré pour fournir les deuxièmes signaux de régulation et/ou de commande (A2) à des actionneurs (30) du véhicule (1) si une évaluation de la première unité d'évaluation (11) est différente de l'évaluation de la deuxième unité d'évaluation (12),
**caractérisé en ce que** la première unité d'évaluation (11) exécute un algorithme d'apprentissage machine et la deuxième unité d'évaluation (12) exécute un algorithme déterministe.

2. Dispositif (10) selon la revendication 1, dans lequel le premier chemin (P1) et le deuxième chemin (P2) sont configurés avec différents équipements matériels.

3. Véhicule (1) pouvant fonctionner de manière automatisée, comprenant plusieurs capteurs de détection d'entourage (21, 22, 23) et un dispositif (10) selon l'une quelconque des revendications 1 à 2, dans lequel chaque capteur de détection d'entourage (21, 22, 23) est relié en transmission de signaux à un premier chemin (P1) et à un deuxième chemin (P2) du dispositif (10), ou différents capteurs de détection d'entourage (21, 22, 23) sont reliés en transmission de signaux au premier chemin (P1) et au deuxième chemin (P2).

4. Procédé permettant d'évaluer des signaux provenant de capteurs de détection d'entourage (21, 22, 23) pour une régulation et/ou une commande de trajectoire d'un véhicule (1) pouvant fonctionner de manière automatisée, comprenant les étapes consistant à
• définir un cadre de fonctionnement à l'intérieur duquel une détection d'entourage et/ou une régulation et/ou commande de trajectoire du véhicule (1) sont effectuées (V1),
• définir une tâche de mesure en fonction du cadre de fonctionnement (V2),
• définir des paramètres de mesure pour vérifier un résultat de mesure résultant de la tâche de mesure (V3),
• effectuer la tâche de mesure à l'aide d'un dispositif (10) selon l'une quelconque des revendications 1 à 2, dans lequel le résultat de mesure est vérifié sur un deuxième chemin (P2) du dispositif (10) (V4), et
• piloter des actionneurs (30) du véhicule (1) avec des deuxièmes signaux de régulation et/ou de commande (A2) du dispositif (10) si une évaluation de la première unité d'évaluation (11) du dispositif (10) est différente de l'évaluation de la deuxième unité d'évaluation (12) (V5),
**caractérisé en ce que** la première unité d'évaluation (11) exécute un algorithme d'apprentissage machine et la deuxième unité d'évaluation (12) exécute un algorithme déterministe.

5. Procédé selon la revendication 4, dans lequel des paramètres de fonctionnement sont définis.

6. Procédé selon la revendication 4 ou 5, dans lequel une détection des capteurs de détection d'entourage (21, 22, 23) est testée en fonction de la tâche de mesure dans des scénarios de test définis.
